# EUROPÄISCHE PATENTSCHRIFT

(11) **EP 3 627 355 B1**
(45) Veröffentlichungstag und Bekanntmachung des Hinweises auf die Patenterteilung: **10.05.2023**
(21) Anmeldenummer: 18195438.9
(22) Anmeldetag: 19.09.2018
(51) Int. Cl.: G06F 16/901

(54) **SYSTEM ZUR GLOBALEN UND GEORDNETEN DATENABLAGE UND/ODER DATENVERWALTUNG MIT HILFE VON DISTRIBUTED LEDGER TECHNOLOGIE**
SYSTEM FOR GLOBAL AND ORDERED DATA STORAGE AND/OR DATA MANAGEMENT USING THE AID OF DISTRIBUTED LEDGER TECHNOLOGY
SYSTÈME DE STOCKAGE ET / OU DE GESTION DE DONNÉES GLOBAL ET À L'AIDE DE LA TECHNOLOGIE DE REGISTRE DISTRIBUÉ

(43) Veröffentlichungstag der Anmeldung: 25.03.2020
(73) Patentinhaber: Deutsche Telekom AG, 53113 Bonn (DE)
(72) Erfinder: HEIDER-AVIET, Andreas, 13187 Berlin (DE); HETZER, Dirk, 12683 Berlin (DE)
(74) Vertreter: Vossius & Partner Patentanwälte Rechtsanwälte mbB

(56) Entgegenhaltungen:
- US-A1- 2017 228 822
- Joseph Poon ET AL: "Plasma: Scalable Autonomous Smart Contracts", , 11. August 2017 (2017-08-11), XP055546090, Gefunden im Internet: URL:https://plasma.io/plasma.pdf [gefunden am 2019-01-22]

## Beschreibung

Die Erfindung betrifft ein System zur globalen und geordneten Datenablage und/oder Datenverwaltung mit Hilfe von Distributed Ledger Technologie (DLT).

Im Detail betrifft die Erfindung ein System zum globalen und geordneten Datenmanagement mit Hilfe von DLT. Ausführungsformen der Erfindung betreffen beispielsweise die Evidenzsicherung im Verkehr. Der Begriff Verkehr bezieht sich dabei auf Straßen-, Schiffs-, oder Luftverkehr. Andere Ausführungsformen betreffen Güterverkehr, Warenströme in der industriellen Fertigung. Die Erfindung wird durch die Ansprüche definiert.

Im Verkehr ist die Nachvollziehbarkeit, d.h. die Beweislage von Geschehnissen von hoher Relevanz. Insbesondere vor dem Hintergrund von zunehmend autonom agierenden Vorrichtungen, einer größer werdenden Mobilität allgemein und einer steigenden Anzahl an Mobilitätsteilnehmern, wird die Sicherung der Nachvollziehbarkeit im Verkehr eine zentrale Bedeutung erlangen. Gleiches gilt für die anderen Anwendungsgebiete wie oben beschrieben. Für Fahrzeuge im Straßenverkehr gibt es, einen Hardware-Blackbox Ansatz, der ähnlich zu dem der Flugzeuge im Luftverkehr ist. Ferner können Daten von den Fahrzeugen an Backendnetzwerke und/oder eine Cloud übermittelt werden.

Verkehrsinfrastruktur- bzw Verkehrsmanagementsysteme existieren meist schon seit Jahr(zehnt)en, sind jedoch in Hinsicht auf die Funktionen, Interaktion und Datenhaltung nicht auf die Nachweispflicht und/oder digitale Verwertbarkeit ausgerichtet.

Nach dem aktuellen Stand der Technik wird der Einsatz von DLT in vielen Bereichen erörtert, fast immer jedoch im Zusammenhang mit einer Tokenwährung oder Smart Contracts. Bei der vorliegenden Erfindung werden die Daten vorzugsweise ohne die Notwendigkeit einer Währung, d.h. rein zum Nutzen einer Smart City bzw. Smart Economy, von öffentlichen und/oder privaten Unternehmen verwaltet. US 2017/228822 A1 stellt ein solches Konzept aus dem Stand der Technik dar.

Die meisten DLT benutzen Konsenzmechanismen wie Proof-of-Work, Proof-of-Stake und/oder generell (meist monetäre) auf Belohnung basierende Mechanismen. Eine Sicherung der Daten durch DLT kann beispielsweise eine juristisch verwertbare Grundlage für Streitfälle in Verkehrslagen mit autonomen/automatisierten Teilnehmern bilden, wobei die autonomen Prozesse ebenfalls DLT basiert sein können.

Viele öffentliche und private Unternehmen werben für eine zukünftige Smart Economy, jedoch eine übergreifende Lösung für eine transparente, geordnete und einheitliche Verfügbarkeit von Evidenzdaten wurde noch nicht etabliert.

Es existiert aktuell keine nationalen oder internationalen Lösungen zum eindeutigen und einheitlichen Festhalten von Information mit DLT und zum späteren zur Verfügung stellen dieser Informationen.

Solche Informationen beinhalten beispielsweise zu einem Zeitpunkt verfügbare Informationen wie beispielsweise automatisierte Aushandlungen bzw. Abstimmungsergebnisse, vorzugsweise aus einem DLT Prozess, bezüglich Bewegungen, Umfeldinformationen und Ähnlichem von autonomen Geräten wie beispielsweise Drohnen, Fahrzeugen, Robotern oder Schiffen.

Die Erfindung betrifft die Nachweissicherung und Bereitstellung bzw. Verwaltung der im Verkehr, vorzugsweise im kooperativen Verkehr, anfallenden Daten.

Ferner kann ein direkter zeitnaher Zugriff auf die DLT Informationen ein schnelleres und effizienteres agieren beim Verkehrsmanagement ermöglichen. Insbesondere ist ein solcher Zugriff relevant in Notfällen, in denen Sicherheitseinrichtungen aktiviert werden sollen, aber auch im alltäglichen Gebrauch zur Optimierung des Verkehrsmanagements.

Es ist daher Aufgabe der Erfindung ein System zur globalen und geordneten Dateiablage mit Hilfe von Distributed Ledger Technologie bereitzustellen. Diese Aufgabe wird von dem Gegenstand der unabhängigen Patentansprüche gelöst. Die abhängigen Patentansprüche beziehen sich auf weitere Aspekte der Erfindung.

In einem Aspekt der Erfindung besteht der Erfindungsgegenstand aus mehreren lokalen Netzen, vorzugsweise DLT Netzen, welche regelmäßig Datensätze, d.h. Blöcke, mit Daten der bzw. über die jeweiligen Verkehrsteilnehmer bilden und somit eine lokale zeitliche Ordnung garantieren. Die lokalen DLT-Netze, d.h. die Blockchains und/oder gerichtete azyklischen Graphen, englischer Fachbegriff "Directed Acyclic Graph", DAG, sind mit den Anderen DLT/DAG interoperabel, sodass sämtliche gespeicherte Daten eingesehen werden können, sofern entsprechende Berechtigungen vorliegen. Im jeweils lokalen Netzkönnen verschiedenartige Technologien bzw. Mechanismen (z.B. zum Teilnehmermanagement) möglich sein, solange diese kompatibel mit dem Gesamtsystem sind. Als Daten werden mindestens die Hashwerte der Daten in den jeweiligen DLT-Netzen gespeichert, die kompletten Daten können separat gespeichert werden.

Ein Aspekt der Erfindung ist dabei, dass für bestimmte Regionen Daten in regionale Netze gebildet werden, und diese in eine globale Dateninfrastruktur integriert werden. Die jeweiligen Netze bilden jeweils kontinuierlich Datenblöcke und garantieren somit einen weitestgehend einheitlichen, vorzugsweise kontinuierlichen, Zeitstempel. Die regionalen DLT werden dann auf höheren Ebenen inter-/ national kombiniert.

Als erfindungsgemäß beansprucht wird das System nach Anspruch 1.

Die Blockbildung in der DL basiert auf einer Blockbildung, vorzugsweise auf einer verketteten Blockbildung. Die jeweilige vorbestimmte Zeit der DSE ist vorzugsweise größer als die vorbestimmte Zeit der DAE.

Der Begriff DLT bezieht zuerst auf die eigentliche Übersetzung "Distributed Ledger Technologie". Ferner schließt dieser Begriff den Distributed Ledger, DL, den Ledger-Prozess und auch ein Netzwerk (kurz Netz) mit ein, welches den Ledger Prozess ausführt. Diese synonyme Verwendung dient der Vereinfachung der Beschreibung. Dem Fachmann ist klar, dass diese Begriffe nicht vollständig voneinander getrennt werden können: Der Ledger ist von Natur aus verteilt auf mehrere Knoten eines Netzwerks. Der Prozess wird von diesen Knoten gemeinsam ausgeführt. Auf einem Knoten können mehrere DLT ausgeführt sein. Um die Lesbarkeit zu vereinfachen wird an entscheidenden Stellen zusätzlich in Klammern auf die Netzeigenschaft hingewiesen.

In einem Aspekt der Erfindung weist die wobei die DAD mehrere Daten-Aggregations-Ebenen, DAE 1 bis DAE n auf und die DAE sind hierarchisch angeordnet. Die DSD weist mehrere Daten-Sicherungs-Ebenen, DSE 1 bis DSE k auf und die DSE sind hierarchisch angeordnet sind. Wobei die erste DAE mindestens einen DL aufweist, die letzte DAE mindestens einen DL aufweist und/oder die Zahl der DL in den DAEs jeweils mit zunehmender Hierarchieordnung gleich bleibt oder abnimmt. Wobei die erste DSE mindestens einen DL aufweist, die letzte DSE mindestens einen DL aufweist und/oder die Zahl der DL in den DSEs jeweils mit zunehmender Hierarchieordnung gleich bleibt oder abnimmt. Wobei in der DAD jeweils mindestens zwei DL aus einer niedrigeren DAE i mit einem DL der nächsthöheren DAE i+1 funktional verbunden sind. Wobei in der DSD jeweils mindestens zwei DL aus einer niedrigeren DSE j mit einem DL der nächsthöheren DSE j+1 funktional verbunden sind. Wobei in dem Verfahren die Datenverarbeitung in den DL der DAE und DSE basierend auf einer Blockbildung durchgeführt wird und die Datenverarbeitungsschritte in den Ebenen hierarchisch aufsteigend durchgeführt werden; wobei in dem Verfahren die Datenmenge pro Block in der DAE Datenmenge mit zunehmender Hierarchieordnung zunimmt. Wobei in dem Verfahren beim Passieren der Domaingrenze während der Datenverarbeitung in einer der DAE eine Ablage der Datenblöcke aus mindestens einem DL der DAE in mindestens einer Datenbank erfolgt und alle nachfolgenden DL in der DSD nur die jeweiligen prozessierten Daten der abgelegten Datenblöcke verarbeiten.

Alternativ oder ergänzend kann die Datenmenge mit zunehmender Hierarchieordnung gleich bleiben. Der Begriff Datenmenge ist als abstrakt zu betrachten und steht in Verbindung mit der Anzahl der DLT (Netze) und der dort jeweilig anfallenden Daten. In Ausführungsformen kann die reale Größe der Daten durch bekannte Mechanismen gleich gehalten oder gar reduziert werden, obwohl neue DLT (Netze) hinzugefügt werden.

In einem Aspekt der Erfindung ist die Datenbank zentral ausgeführt.

In einem Aspekt der Erfindung wird in jeder DAE der DAD jeder Datensatz in jedem Datenblock mit Identitäten, Nutzungsrechten und/oder Rollen verknüpft und die Verknüpfung zusammen mit dem Datenblock an die nachfolgende DAE und/oder DSE übertragen wird.

In einem Aspekt der Erfindung ist ein zentral oder dezentral ausgeführtes User Management System dazu konfiguriert, die Identitäten, Nutzungsrechte und/oder Rollen zu verwalten und Datenabfragen an einzelne DL der DAD oder DSD zu empfangen und gemäß der Nutzerrechte und Rollen zu bearbeiten.

Die Identitäten, Nutzungsrechte und/oder Rollen werden vorzugsweise als Metadaten abgelegt und verwaltet.

In einem Aspekt der Erfindung ist einer oder mehrere der DL eine Blockchain und oder ein Directed Acyclic Graph (DAG).

In einem Aspekt der Erfindung sind die Datenquellen an Subjekten eines Verkehrsstromes und/oder Einrichtungen einer entsprechenden Verkehrsstromlenkung ausgeführt und/oder die erste DAE ist in einer Road-Side-Unit, RSU, ausgeführt.

In Ausführungsformen, sind die Datenquellen mit einem Mobilfunknetz verbunden, welche über Edge-Computing Einrichtungen verfügt, beispielsweise ein 5G Netz. Die Datenquellen sind dabei vorzugsweise über eine SIM-Card, vorzugsweise als Endgerät, mit dem Mobilfunknetz verbunden.

In Ausführungsformen werden die Daten von einem Mobilfunknetzbetreiber, MNO, erzeugt,. Die Daten basieren beispielsweise auf den Bewegungsdaten von mit dem Mobilfunknetz verbundenden Geräten. Die Datenquelle liegt also im Nutzerendgerät oder alternativ bzw. ergänzend beim MNO. Es können auch andere Netzwerktechnologien verwendet werden.

Mehrere solcher lokalen Erfassungen können mit dem erfindungsgemäßen System in einem regionalen bzw. globalen abgelegt und verwaltet werden.

In einem Aspekt der Erfindung sind die Datenquellen an Subjekten eines Verkehrsstrom und/oder Einrichtungen einer entsprechenden Verkehrsstromlenkung ausgeführt und die erste DAE ist in einer Edge Computing Einrichtung ausgeführt.

In einem Aspekt der Erfindung ist die DAD mindestens teilweise in Edge-Computing Einrichtungen ausgeführt und die DSD in einer Backendnetzwerkstruktur und/oder Cloud ausgeführt, welche mit den Edge-Computing Einrichtungen und den Datenquellen über ein Datenverarbeitungsnetzwerk verbunden ist.

Ferner wird als erfindungsgemäß beansprucht ein System aus mindestens zwei Datenverarbeitungsvorrichtungen, die konfiguriert sind, an einem DLT (Netz) teilzunehmen gemäß der voranstehenden Aspekte auszuführen.

Ferner wird als erfindungsgemäß beansprucht ein Computerprogrammprodukt, dass eine Datenverarbeitungsvorrichtung dazu veranlasst, an dem System nach einem der voranstehenden Aspekte teilzunehmen.

In den Figuren zeigt:
Fig. 1 ein Blockdiagramm des Systems nach einer ersten Ausführungsform der Erfindung,
Fig. 2 ein Blockdiagramm des Systems nach einer zweiten Ausführungsform der Erfindung,
Fig. 3 ein Blockdiagramm des Systems nach einer dritten Ausführungsform der Erfindung und
Fig. 4 ein Blockdiagramm des Systems nach einer vierten Ausführungsform der Erfindung.

### Detaillierte Beschreibung der Figuren

Im Folgenden wird die Erfindung anhand mehrerer Ausführungsformen und Figuren erläutert. Dabei werden Merkmale jedoch nur dann im Detail beschrieben, wenn sie zum ersten Mal genannt werden. Gleiche Bezugszeichen beziehen sich auf gleiche Merkmale. Aus Gründen der Übersichtlichkeit wird auf Wiederholungen gleicher Beschreibungsteile verzichtet.

In Ausführungsformen der Erfindung besitzt das Nachweissystem verschiedene Verarbeitungsdomänen auf. Das erfindungsgemäße System weist eine Datenaggregationsdomain, DAD, und eine Datensicherungsdomain, DSD, auf. Zwischen der DAD und der DSD befindet sich eine Domaingrenze.

Jede der DAD und der DSD weisen vorzugsweise weitere Datenverarbeitungsebenen auf. Die unterste Ebene der DAD wird durch mindestens zwei DLT bzw. lokale Netze gebildet. Mit diesen DLT (Netzen) sind jeweils mindestens zwei datenverarbeitende Netzwerkknoten verbunden. Jeder datenverarbeitende Netzwerkknoten ist zur Teilnahme an einem Distributed Ledger Prozess konfiguriert und wird alternativ als Datenquelle bezeichnet.

Der Begriff Datenverarbeitungsebene umfasst sowohl Datenaggregationsebenen, DAE, als auch Datensicherungsebenen, DSE. Der Begriff Ebene selbst ist dem Fachmann bekannt und beschreibt eine bestimmt hierarchisch organisierte Datenverarbeitung. Die Datenverarbeitung findet jeweils in der jeweiligen Ebene statt. Beim Wechsel der Ebene findet ebenfalls eine Datenverarbeitung statt.

Die mindestens zwei Distributed Ledger bilden zusammen die unterste Datenaggregationsebene, DAE. Die Distributed Ledger der untersten DAE sind in der nächsthöheren Datenverarbeitungsebene zusammengefasst.

In der jeweils unteren Datenverarbeitungsebene werden wenige Daten verarbeitet, dafür jedoch eine schnelle Blockbildung durchgeführt. In der jeweils höheren Datenverarbeitungsebene werden größere Blöcke gebildet, da dort die Daten von mehreren DLTs aus der jeweils unterliegenden Ebene zusammengeführt werden, die Blöcke der höheren Datenaggregationsebene werden jedoch vorzugsweise weniger häufig gebildet.

Der erfindungsgemäße Effekt besteht darin, dass in niedrigen Datenverarbeitungsebenen jeweils wenige Daten erfasst und verarbeitet bzw. zu Blöcken zusammengefügt werden, und in den jeweils höheren Datenverarbeitungsebenen jeweils größere Datenmengen in Blöcken zusammengefügt werden. Wobei die Datenmenge wie oben beschrieben durch bekannte Mechanismen reduziert werden kann.

Dabei werden vorteilhaft in niedrigen Datenaggregationsebenen die Datenblöcke jeweils häufiger gebildet, vorzugsweise im Millisekundenbereich. In höheren Datenaggregationsebenen werden die Datenblöcke relativ seltener gebildet, vorzugsweise im Minutenbereich.

In der ersten Datenverarbeitungsebene der Datensicherungsebene sind die zusammengeführten Inhalte der Datenaggregationsebene in einer zentral ausgeführten Datenbank gespeichert. Die Speicherung der Daten in der Datenbank erfolgt entweder je nach Bedarf während der Datenverarbeitung in der/den Datenaggregationsebene(n) oder in der Datenverarbeitung zwischen der letzten Datenaggregationsebene und der ersten Datensicherungsebene.

Eine weitere alternative Ausführungsform betrifft die redundante Sicherung in mehreren Datenbanken, vorzugsweise nach Datensicherungsebenen geordnet.

Gleichzeitig wird bei der Speicherung der gespeicherte Datensatz prozessiert, und ein ein Hash gebildet. In der nachfolgenden Datenverarbeitungsebene werden nun die Datenhashes der darunterliegenden Datenverarbeitungsebene verarbeitet, wobei die Nachvollziehbarkeit erhalten bleibt.

Der erfindungsgemäße Vorteil besteht darin, dass nach der Speicherung in der Datensicherungsdomain keine Daten der Datenaggregationsdomain mehr verteilt verarbeitet werden, sondern lediglich die sehr viel kleineren Hashes der Datenaggregationsebene.

Gleichzeitig ist es bei Bedarf möglich auf die Daten, vorzugsweise auf die vollständigen Daten, zuzugreifen, da diese in der erfindungsgemäßen Datenbank gespeichert sind und anhand der Hashes in der Datenbank sowie in der/ den Datenverarbeitungsebene(n) aufgefunden, assoziiert und/oder abgerufen werden können.

Ferner wird in der Datensicherungsebene sichergestellt, dass die Daten unterschiedlicher Quellen in der Datenaggregationsebene miteinander nachweissicher kohärent abgelegt werden. Somit bleibt die Nachweissicherheit aus der jeweils unterliegenden Datenverarbeitungsebene erhalten. Gleichzeitig sinkt in den höheren Datenverarbeitungsebenen die verarbeitete Datenmenge, sobald eine Speicherung in der Datenbank erfolgt ist.

In weiteren Ausführungsformen der Erfindung wird in jeder Datenverarbeitungsebene, vorzugweise in jeder DAE, jeder Datensatz mit einem oder mehreren Attributen versehen. Diese Attribute sind mit Nutzungsrechten und Rollen verknüpft. Mit Hilfe von entsprechenden Filtern wird es ermöglicht, die Daten entsprechend einer Rolle abzurufen.

Die Attribute bleiben während der Datenverarbeitung und beim Wechsel der Datenverarbeitungsebene mit dem Datensatz verknüpft. Dem Fachmann sind entsprechende User Management Systeme, USM, bekannt, die konfiguriert werden können die Nutzerrechte und Rollen zu verwalten und Zugriffe auf die Daten zu steuern. Das USM kann zentral oder dezentral als DLT ausgeführt sein. Eine dezentrale Ausführung ist bevorzugt.

Das erfindungsgemäße System erlaubt es, die Daten der einzelnen DLT (Netze) in der Datenaggregationsebene miteinander zu verknüpfen und in einer höheren Datenverarbeitungsebene zusammenzuführen. Dabei ist in höheren Datenverarbeitungsebenen der Datenverarbeitungsaufwand geringer, wodurch das gesamte System skalierbar bleibt.

In den unteren Datenverarbeitungsebenen kann auf die Datensätze schnell und dezentral zugegriffen werden. Mit Passieren der Speichergrenze ist ein solcher dezentraler Zugriff nicht mehr möglich. Jedoch bleibt durch die dezentrale Verarbeitung der Hashes die vertrauenswürdige Datensicherung erhalten.

Entsprechende Nutzungsrecht- bzw. Rollenverwaltungssysteme, die dem Fachmann bekannt sind, erlauben es, den Zugriff auf die in einer Datensicherungsdatenbank gespeicherten Daten zu steuern.

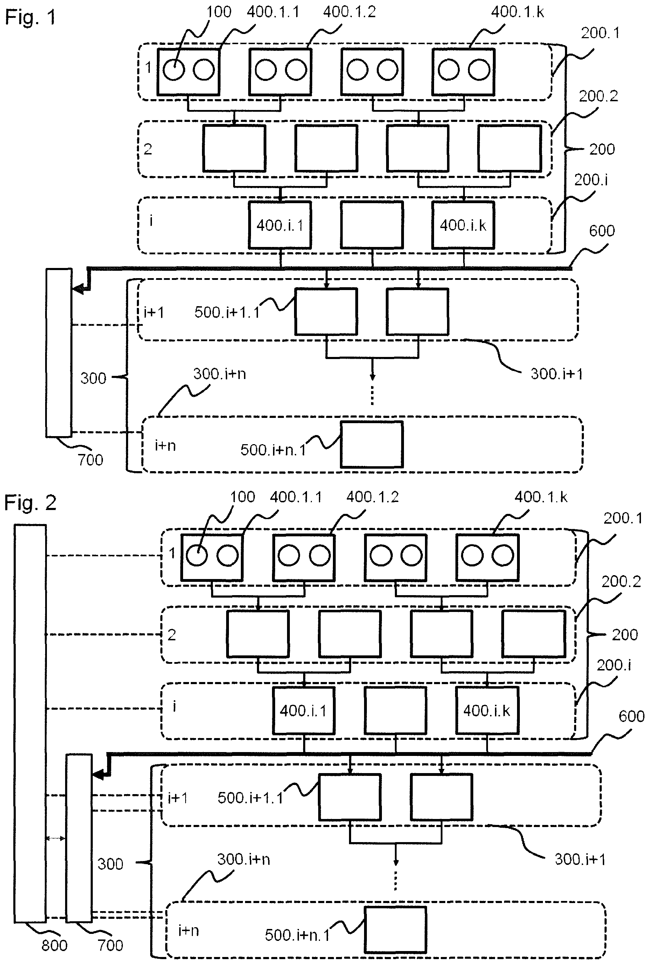

Figur 1 zeigt ein Blockdiagramm des Systems nach einer ersten Ausführungsform der Erfindung. Die Datenverarbeitungsebenen sind als gestrichelte Strukturen dargestellt und mit Nummern 1, 2, i, i+1 und i+n beispielhaft indiziert. Jeweils mehrere Datenverarbeitungsebenen sind zu einer Datenaggregationsdomain 200 und einer Datensicherungsdomain 300 zusammengefasst.

Die DAD 200 enthält mehrere DAE 200.i, wobei i jeweils für den Index der Ebene steht. Jede DAE 200.i enthält mehrere DLT (Netze) 400.i.k, wobei k für den jeweiligen Index des DLT steht. Zwei oder mehr der DLT 400.i.k sind jeweils mit einem DLT in der nächsten Ebene im Sinne einer Datenverarbeitung funktional verknüpft, was durch einen durchgezogenen Pfeil dargestellt ist. In der untersten DAE enthält jeder DLT mindestens zwei Datenquellen 100.

Die DSD 300 enthält mehrere DSE 300.i, wobei i jeweils für den Index der Ebene steht. Jede DSE 300.i enthält mehrere DLT (Netze) 500.i.k, wobei k für den jeweiligen Index des DLT steht. Zwei oder mehr der DLT 500.i.k sind jeweils mit einem DLT in der nächsten Ebene im Sinne einer Datenverarbeitung funktional verknüpft, was durch einen durchgezogenen Pfeil dargestellt ist.

In den Figuren, sind die Indices entsprechend des dargestellten Ausführungsbeispiel gewählt, und können daher von der allgemeineren Darstellung in der Beschreibung abweichen, ohne dass sich dadurch eine Einschränkung der Beschreibung oder der Figur ergibt.

Zwischen der DAD 200 und der DSD 300 ist eine Speichergrenze 600 vorgesehen. In dieser Ausführungsform findet bei der Datenverarbeitung in, vorzugsweise nach, der letzten DAE eine Speicherung der Daten aus den DLT (Netzen) der DAE in die Datenbank statt. Mit anderen Worten, beim Passieren der Domaingrenze werden die Daten in der Datenbank gespeichert. Nach der Speicherung werden anstatt der Daten selbst, ein prozessiertes Abbild der Daten weiter verarbeitet. Es handelt sich bei dem prozessierten Abbild um einen Hash.

Nach der Speicherung hat jede Ebene Zugriff auf die in der Datenbank 700 gespeicherten Daten, was als gestrichelte Verbindungslinie dargestellt ist.

Figur 2 zeigt ein Blockdiagramm des Systems nach einer zweiten Ausführungsform der Erfindung. In dieser Ausführungsform ist jede Ebene, d.h. auch jede DLT der jeweiligen Ebene mit einem User Management System, UMS, 800 verbunden.

Vorzugsweise ist das USM 800 parallel zur Datenverarbeitung angeordnet. Das UMS 800 ist konfiguriert die Daten navigierbar zu machen, d.h. pro Ebene sind Metadaten verfügbar, beispielsweise Ledger-Typ, Indizes, Interfaces, Zugriffsrechte, Attribute der Daten, Filter usw. Diese Metadaten werden im UMS verwaltet. Es ist bevorzugt jeweils ein UMS pro Ebene zu betreiben, um eine Trennung der Verantwortlichkeiten zu erzielen. Die einzelnen UMS interagieren miteinander, um die globale Navigierbarkeit sicherzustellen. Es ist besonders bevorzugt, dass das UMS bzw. die UMS jeweils als DLT ausgeführt und vorteilhafterweise in die Datenverarbeitungs-DLT integriert sind.

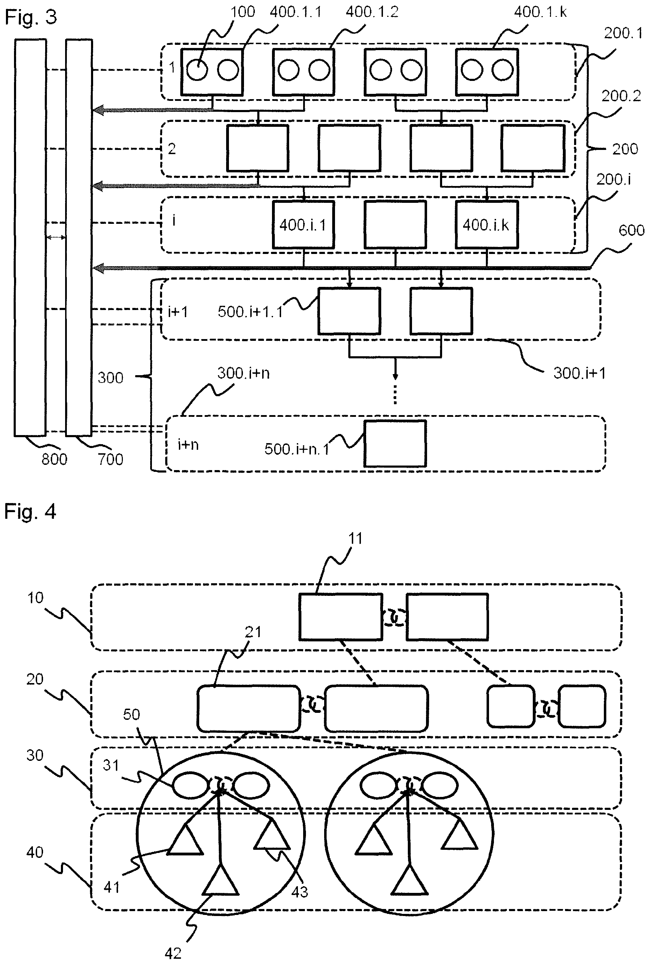

Fig. 3 zeigt ein Blockdiagramm des Systems nach einer dritten Ausführungsform der Erfindung. In dieser Ausführungsform erfolgt eine Speicherung an mehreren Stellen während der Datenverarbeitung in der DAD 200. Dabei können einzelne oder alle DLT (Netze) die Daten in der Datenbank 700 ablegen. Bevorzugt erfolgt eine Datenablage, wenn eine vorbestimmte oberen Grenze der Datenmenge von der jeweiligen DLT erreicht wurde. Wie beschrieben erfolgt nach der Speicherung eine Weiterverarbeitung eines prozessierten Abbilds der abgelegten Daten. Beim Passieren der Domaingrenze 600 sind alle Daten in der Datenbank 700 abgelegt.

Fig. 4 zeigt ein Blockdiagramm des Systems nach einer vierten Ausführungsform der Erfindung. Diese Ausführungsform wird anhand einer alternativen Darstellung erläutert, wobei die dargestellten Merkmale zwar andere Bezugszeichen aufweisen können sich jedoch grundsätzlich auf bisher beschriebene Merkmale beziehen, sofern dies nicht explizit anders beschrieben ist.

Auf lokaler Ebene sind in einem lokalen Netzwerk 50 verschiedene Knoten 31 miteinander verbunden um an einem DLT Prozess 30 teilzunehmen. Hier sind im Folgenden DLT-Prozesse durch ineinander verschlungene Ringe dargestellt Bei dem DLT (Netz) 30 kann es sich beispielsweise um Blockchain und/oder DAG Prozesse handeln. Der DLT Prozess 30 basiert auf Daten 41, 42, 43, die von Datenlieferanten 40 zur Verfügung gestellt werden. In Ausführungsformen kann es sich dabei um Bewegungsdaten 41 von Geräten handeln, um Daten von Verkehrsinfrastrukturelementen 43 handeln, oder um Sensordaten 42 handeln. Als Datenlieferant ist ein mobile network operator, MNO, bevorzugt, der die genannten Daten in seinem Telekommunikationsnetzwerk sammeln und übertragen kann, bevorzugt in einem 5G Netzwerk sammeln und übertragen kann. Der DLT Prozess 30 findet in dieser Ausführungsform bevorzugt in einer Edge-Computing Einrichtung des Telekommunikationsnetzes statt. Dieser lokale Abstimmungsprozess kann der Abstimmung einer Verkehrssituation an einer Kreuzung entsprechen an der mehrere Verkehrsteilnehmer 41 teilnehmen und in der auch Daten von Sensoren 42 und Infrastrukturelementen 43, wie beispielsweise Lichtsignalanlagen berücksichtigt werden. In dieser Ebene müssen alle Daten dezentral verfügbar sein, um jedem Teilnehmer ein autonomes Handeln auf der Basis maximal verfügbarer Daten zu ermöglichen.

In einer übergeordneten Ebene 20 findet eine regionale Aggregation statt. Dort werden die Daten der lokalen Netzwerke 50 in regionalen Knoten 21 gesammelt. Die regionalen Knoten 21 nehmen ihrerseits an einem DLT Prozess teil. Dieser regionale Abstimmungsprozess kann einer regionalen Abstimmung eines Verkehrsflusses in einem Stadtteil entsprechen. In dieser Ebene müssen schon nicht mehr alle Daten ständig verfügbar sein. Beispielsweise können bestimmte Sensordaten 42 bereits in einer Datenbank abgelegt worden sein.

In einer übergeordneten Ebene 10 findet eine globale Koordination statt. Dabei werden die Daten der regionalen Knoten 21 in globalen Knoten 11 zusammengefasst. Die globalen Knoten 11 nehmen ihrerseits an einem globalen DLT Prozess teil. Diese globale Abstimmung kann der Abstimmung eine Verkehrsflusses in einer Stadt oder einer größeren geografischen Region entsprechen. Alternativ oder ergänzen können die Daten auch für statistische oder forensische Zwecke beispielsweise bei Unfällen ausgewertet werden. Alternativ oder ergänzend können die Daten auch für Auswertungen mit künstlicher Intelligenz und/oder Machine Learning verwertet werden.. In dieser Ebene werden nur noch Hashes der abgelegten Daten verarbeitet.

Das beschriebene System erlaubt also eine für eine transparente, geordnete und einheitliche Verfügbarkeit von Evidenzdaten während eines Abstimmungsprozess im Straßenverkehr. Das erfindungsgemäße UMS ist nun vorzugsweise so konfiguriert, dass in der lokalen Phase alle lokalen Nutzer Zugriff auf die lokalen Daten haben. Bereits in der regionalen Phase kann der Datenzugriff eingeschränkt sein, denn nur bestimmte Verkehrslenkungseinrichtungen benötigen Zugriff auf die Daten. Auch für eine spätere Abfrage der Daten ist das UMS relevant. Das UMS ist so konfiguriert, dass nur berechtigte Nutzer die abgelegten Daten abrufen können. Beispielsweise kann eine lokale Polizeibehörde nur zum Abruf lokalen Daten berechtigt sein, eine nationale Behörde hingegen kann für die Abfrage aller Daten berechtigt sein.

Die Erfindung wurde anhand mehrerer Ausführungsformen beschrieben. Die Ausführungsformen begrenzen jedoch den Erfindungsgegenstand nicht. Vielmehr ist es dem Fachmann möglich Merkmale verschiedener Ausführungsformen miteinander zu kombinieren.

## Patentansprüche

1. System zur netzwerkbasierten Nachweissicherung von zu einem Zeitpunkt verfügbaren Ergebnissen automatisierter Aushandlungen oder Abstimmungen aus einem Distributed Ledger Technology, DLT, Prozess von autonomen Geräten im Verkehr:
wobei die Daten aus mindestens zwei Datenquellen (100) gesichert werden, die an Subjekten eines Verkehrsstromes und/oder Einrichtungen einer entsprechenden Verkehrsstromlenkung ausgeführt sind;
wobei die Sicherung hierarchisch in einer Daten-Aggregations-Domain, DAD, (200) und einer Daten-Sicherungs-Domain, DSD, (300) organisiert ist;
wobei die untersten Datenverarbeitungsebenen der Hierarchie Daten-Aggregations-Ebenen, DAE, (200.i) der Daten-Aggregations-Domain, DAD, (200) sind;
wobei die unterste DAE (200.1) mindestens einen Distributed Ledger, DL, aufweist, die oberste DAE (200.n) mindestens einen DL aufweist und die Zahl der DL in den DAEs (200.i) jeweils mit zunehmender Hierarchieordnung gleich bleibt oder abnimmt;
wobei die Datenquellen (100) konfiguriert sind, an mindestens einem DL (400) der untersten Datenverarbeitungsebene teilzunehmen und jeder DL der untersten Datenverarbeitungsebene mindestens zwei Datenquellen (100) enthält;
wobei die DAE (200.1) der untersten Datenverarbeitungsebene der Hierarchie mindestens einen DL (400.1.k) aufweist, der konfiguriert ist, die Daten der Datenquellen (100) zu Datenblöcken zusammenzufügen;
wobei jeweils mindestens zwei DL aus einer niedrigeren DAEᵢ mit einem DL der nächsthöheren DAEᵢ₊₁ funktional verbunden sind, und Daten aus einer jeweils unterliegenden Datenverarbeitungsebene in einer jeweils nächst höheren Datenverarbeitungsebene in Datenblöcke zusammengefügt werden;
wobei in jeweils niedrigeren DAE (200.i) relativ zur höheren DAE (200.i+1) weniger Daten pro Block verarbeitet werden und dafür eine schnelle Blockbildung durchgeführt wird;
und in jeweils höheren DAE (200.i+1) größere Blöcke aus Zusammenfügung von Daten von mehreren DLs der jeweils niedrigeren DAE (200.i) gebildet werden und diese Datenblöcke relativ zur niedrigeren DAE (200.i) weniger häufig gebildet werden;
wobei die Datenverarbeitungsebenen der Hierarchie oberhalb der obersten DAE (200.n) Daten-Sicherungs-Ebenen, DSE, (300.j) der Daten-Sicherungs-Domain, DSD, (300) sind;
wobei die unterste DSE (300.1) mindestens einen DL (500.1k) aufweist, die oberste DSE (300.m) mindestens einen DL (500.m) aufweist und/oder die Zahl der DL (500.j.k) in den DSEs jeweils mit zunehmender Hierarchieordnung gleich bleibt oder abnimmt;
wobei jeweils mindestens zwei DL aus einer niedrigeren DSEⱼ mit einem DL der nächsthöheren DSEⱼ₊₁ funktional verbunden sind und Daten aus einer jeweils unterliegenden Datenverarbeitungsebene in einer jeweils nächst höheren Datenverarbeitungsebene in Datenblöcke zusammengefügt werden;
wobei in jeweils niedrigeren DSE (300.j) relativ zur höheren DSE (300.j+1) weniger Daten pro Block verarbeitet werden und dafür eine schnelle Blockbildung durchgeführt wird; und in jeweils höheren DSE (300.j+1) größere Blöcke aus Zusammenfügung von Daten von mehreren DLs der jeweils niedrigeren DSE (300.j) gebildet werden und diese Datenblöcke relativ zur niedrigeren DSE (300.j) weniger häufig gebildet werden;
wobei zwischen der DAD (200) und der DSD (300) eine Speichergrenze (600) vorgesehen ist, so dass nach der Datenverarbeitung in der obersten DAE (200.n) eine Ablage der jeweils gebildeten Datenblöcke in mindestens einer Datenbank (700) erfolgt und der nachfolgenden untersten DSE (300.1) nur jeweilig prozessierte Abbilder der abgelegten Datenblöcke, anstatt der Datenblöcke selbst, verarbeitet werden;
wobei die Datenbank (700) zentral ausgeführt ist;
wobei ein prozessierte Abbild ein Hashwert eines abgelegten Datenblocks ist;
wobei die unterste DSE (300.1) mindestens einen DL (500.1.k) aufweist, der konfiguriert ist, die prozessierten Abbilder der in der Datenbank gespeicherten Datenblöcke der obersten DAE (200.n) zu Datenblöcken zusammenzuführen.

2. System nach Anspruch 1, wobei in jeder DAE der DAD jeder Datensatz in jedem Datenblock mit Identitäten, Nutzungsrechten und/oder Rollen verknüpft wird und die Verknüpfung zusammen mit dem Datenblock an die nachfolgende DAE und/oder DSE übertragen wird.

3. System nach einem der Ansprüche 1 oder 2, wobei ein zentral oder dezentral ausgeführtes User Management System dazu konfiguriert ist, die Identitäten, Nutzungsrechten und/oder Rollen zu verwalten und Datenabfragen an einzelne DL der DAD oder DSD zu empfangen und gemäß der Nutzerrechte und Rollen zu bearbeiten.

4. System nach einem der Ansprüche 1 bis 3, wobei einer oder mehrere der DL eine Blockchain und oder ein Directed Acyclic Graph, DAG, ist.

5. System nach einem der Ansprüche 1 bis 4, wobei die erste DAE in einer Road-Side-Unit, RSU, ausgeführt ist.

6. System nach einem der Ansprüche 1 bis 5, wobei die erste DAE in einer Edge Computing Einrichtung ausgeführt ist.

7. System nach einem der Ansprüche 1 bis 4, wobei die DAD mindestens teilweise in Edge-Computing Einrichtungen ausgeführt ist und die DSD in einer Backendnetzwerkstruktur und/oder Cloud ausgeführt ist, welche mit den Edge-Computing Einrichtungen und den Datenquellen über ein Datenverarbeitungsnetzwerk verbunden ist.

8. Computerprogrammprodukt, dass eine Datenverarbeitungsvorrichtung dazu konfiguriert, ein datenverarbeitender Netzwerkknoten eines Systems nach einem der Ansprüche 1 bis 7 zu sein.

## Claims

1. A system for network-based evidence backup of at one point available results of automated negotiations or coordinations from a distributed ledger technology, DLT, process of autonomous devices in traffic:
wherein the data are saved from at least two data sources (100) which are formed at subjects of a traffic flow and/or devices of a corresponding traffic flow control;
wherein the backup is hierarchically organized in a data aggregation domain, DAD, (200) and a data backup domain, DSD, (300);
wherein the lowest data processing levels of the hierarchy are data aggregation levels, DAE, (200.i) of the data aggregation domain, DAD, (200);
wherein the lowest DAE (200.1) comprises at least one distributed ledger, DL, the highest DAE (200.n) at least one DL and the number of DLs in DAEs (200.i) respectively remains the same or decreases with increasing hierarchy;
wherein the data sources (100) are configured to participate in at least one DL (400) of the lowest data processing level and every DL of the lowest data processing level comprises at least two data sources (100);
wherein the DAE (200.1) of the lowest data processing level of the hierarchy comprises at least one DL (400.l.k) configured to concatenate the data of the data sources (100) to data blocks;
wherein at least respectively two DLs from a lower DAEᵢ are functionally connected to a DL of the next higher DAEᵢ₊ₗ, and data from a respectively lower data processing level are concatenated in a respectively next higher data processing level to data blocks;
wherein less data per block are processed in respectively lower DAEs (200.i) with respect to the next higher DAE (200.i+l) and therefor a fast block formation is performed;
and in respectively higher DAEs (200.i+l), bigger blocks are formed by compiling data from a plurality of DLs of the respectively lower DAE (200.i) and these data blocks are formed less frequently with regard to the lower DAE (200.i);
wherein the data processing levels of the hierarchy above the highest DAE (200.n) are data backup levels, DSE, (300.j) of the data backup domain, DSD, (300);
wherein the lowest DSE (300.1) comprises at least one DL (500.lk), the highest DSE (300.m) comprises at least one DL (500.m) and/or the number of DLs (500.j.k) remains the same or decreases in the DSEs respectively with increasing hierarchy;
wherein at least respectively two DLs from a lower DSEⱼ is functionally connected with a DL of the next higher DSEⱼ₊ₗ and data from a respectively lower data processing level in a respectively next higher data processing level are concatenated to data blocks;
wherein in respectively lower DSEs (300.j) with respect to the higher DSE (300.j+l) less data per block are processed and for that a faster block formation is performed; and in respectively higher DSEs (300.j+l) bigger blocks from a compilation of data from a plurality of DLs of the respectively lower DSE (300.j) are formed and these data blocks are formed less frequently with regard to the lower DSE (300.j);
wherein between DAD (200) and DSD (300) a memory border (600) is provided so that after the data processing in the highest DAE (200.n) the respectively formed data blocks can be stored in at least one database (700) and in the subsequently lowest DSE (300.1) only respectively processed images of the stored data blocks, instead of the data blocks as such, are processed;
wherein the database (700) is centralized;
wherein a processed image is a hash value of a stored data block;
wherein the lowest DSE (300.1) comprises at least a DL (500.l.k) configured to concatenate the processed images of the data blocks of the highest DAE (200.n) stored in the database to data blocks.

2. The system according to claim 1, wherein in each DAE of the DAD, every data set in each data block is linked with identities, user rights and/or roles and the link is transmitted together with the data block to the subsequent DAE and/or DSE.

3. The system according to any one of claim 1 or 2, wherein a centralized or decentralized user management system is configured to manage the identities, user rights and/or roles and to receive data requests to individual DLs of the DAD or DSD and to process them according to user rights and roles.

4. The system according to any one of claims 1 to 3, wherein one or more of the DL is a block chain and/or a directed acyclic graph, DAG.

5. The system according to any one of claims 1 to 4, wherein the first DAE is formed in a road-side-unit, RSU.

6. The system according to any one of claims 1 to 5, wherein the first DAE is formed in an edge computing means.

7. The system according to any one of claims 1 to 4, wherein the DAD is executed at least partly in edge computing means and the DSD is formed in a backend network structure and/or cloud connected to the edge computing means and the data sources via a data processing network.

8. A computer program product, configuring a data processing device to constitute a data processing network node of a system according to any one of claims 1 to 7.

## Revendications

1. Système pour la sauvegarde basée réseau de justificatifs de résultats disponibles momentanément de négociations ou d'accords automatisés lors d'un processus de technologie de registre distribué DLT d'appareils autonomes en circulation :
où les données provenant d'au moins deux sources de données (100) sont sauvegardées, lesquelles sont transmises à des sujets d'un flux de trafic et/ou à des entités d'un pilotage de flux de trafic correspondant ;
où la sauvegarde est organisée hiérarchiquement dans un domaine d'agrégation de données DAD, (200) et un domaine de protection de données DSD, (300) ;
où les étages de traitement de données les plus bas de la hiérarchie sont des étages d'agrégation de données DAE, (200.i) du domaine d'agrégation de données DAD (200) ;
où l'étage DAE le plus bas (200.1) présente au moins un registre distribué DL, le DAE le plus élevé (200.n) présente au moins un DL et le nombre de DL dans les DAE (200.i) respectivement reste constant ou décroît à mesure d'une progression dans la hiérarchie ;
où les sources de données (100) sont configurées pour participer à au moins un DL (400) de l'étage de traitement de données le plus bas, et chaque DL de l'étage de traitement de données le plus bas contient au moins deux sources de données (100) ;
où le DAE (200.1) de l'étage de traitement de données le plus bas de la hiérarchie présente au moins un DL (400.1.k), lequel est configuré pour assembler les données des sources de données (100) en blocs de données ;
où au moins deux DL d'un DAEᵢ inférieur sont fonctionnellement reliés chacun à un DL du DAEᵢ₊ₗ immédiatement supérieur, et des données d'un étage de traitement de données subordonné respectif sont assemblées en blocs de données dans un étage de traitement de données immédiatement supérieur respectif ;
où, dans le DAE (200.i) inférieur respectif, par rapport au DAE (200.i +1) supérieur, moins de données sont traitées par bloc et une formation de bloc rapide est de ce fait réalisée ;
et dans le DAE (200.i+1) supérieur respectif, des grands blocs sont formés par assemblage de données de plusieurs DL du DAE (200.i) inférieur respectif, et ces blocs de données sont formés moins fréquemment par rapport au DAE (200.i) inférieur ;
où les étages de traitement de données de la hiérarchie au-dessus du DAE le plus élevé (200.n) sont des étages de stockage de données DSE, (300.j) du domaine de protection de données DSD (300) ;
où le DSE le plus bas (300.1) présente au moins un DL (500.1k), le DSE le plus élevé (300.m) présente au moins un DL (500.m) et/ou le nombre de DL (500.j.k) dans les DSE respectivement reste constant ou décroît à mesure d'une progression dans la hiérarchie ;
où au moins deux DL d'un DSEⱼ inférieur sont fonctionnellement reliés chacun à un DL du DSEⱼ₊ₗ immédiatement supérieur, et des données d'un étage de traitement de données subordonné respectif sont assemblées en blocs de données dans un étage de traitement de données immédiatement supérieur respectif ;
où, dans le DSE (300j) inférieur respectif, par rapport au DSE (300j+l) supérieur, moins de données sont traitées par bloc et une formation de bloc rapide est de ce fait réalisée ;
et dans le DSE (300j+l) supérieur respectif, des grands blocs sont formés par assemblage de données de plusieurs DL du DSE (300.j) inférieur respectif, et ces blocs de données sont formés moins fréquemment par rapport au DSE (300.j) inférieur ;
où, entre le DAD (200) et le DSD (300), il est prévu une limite de stockage (600), de sorte qu'après le traitement de données dans le DAE (200.n) le plus élevé, a lieu un stockage des blocs de données respectivement formés dans au moins une base de données (700), et que dans le DSE (300.1) inférieur suivant ne sont traitées que des images traitées respectives des blocs de données stockés, au lieu des blocs de données en tant que tels ;
où la base de données (700) est centralisée ;
où une image traitée est une valeur de hachage d'un bloc de données stocké ;
où le DSE le plus bas (300.1) présente au moins un DL (500.1.k), lequel est configuré pour assembler en blocs de données les images traitées des blocs de données du DAE (200.n) le plus élevé mémorisés dans la base de données.

2. Système selon la revendication 1, où dans chaque DAE du DAD, chaque enregistrement dans chaque bloc de données est corrélé à des identités, des droits d'utilisation et/ou des rôles et où la corrélation est transmise conjointement avec de bloc de données au DAE et/ou au DSE suivant.

3. Système selon la revendication 1 ou la revendication 2, où un système de gestion centralisé ou décentralisé des utilisateurs est configuré pour administrer les identités, les droits d'utilisation et/ou les rôles, et recevoir des demandes de données à différents DL du DAD ou du DSD, et à les traiter conformément aux droits d'utilisation et aux rôles.

4. Système selon l'une des revendications 1 à 3, où un ou plusieurs des DL est une chaîne de blocs et ou un graphe acyclique orienté DAG.

5. Système selon l'une des revendications 1 à 4, où le premier DAE est exécuté dans une unité de bord de route RSU.

6. Système selon l'une des revendications 1 à 5, où le premier DAE est exécuté dans une entité d'informatique en périphérie.

7. Système selon l'une des revendications 1 à 4, où le DAD est exécuté au moins partiellement dans des entités d'informatique en périphérie et le DSD est exécuté dans une structure de réseau backend et/ou un nuage, reliés aux entités d'informatique en périphérie et aux sources de données par un réseau de traitement de données.

8. Produit de programme informatique, où un processeur de données est configuré pour être un noeud de réseau traitant des données d'un système selon l'une des revendications 1 à 7.
